# EUROPÄISCHE PATENTANMELDUNG

(11) **EP 2 597 259 A1**
(43) Veröffentlichungstag der Anmeldung: **29.05.2013**
(21) Anmeldenummer: 11190431.4
(22) Anmeldetag: 24.11.2011
(51) Int. Cl.: F01D 5/18, F01D 5/28

(54) **Modifizierte Oberfläche um ein Loch**

(71) Anmelder: Siemens Aktiengesellschaft, 80333 München (DE)
(72) Erfinder: Beck, Thomas, 16341 Panketal (DE); Amann, Christian, 46238 Bottrop (DE); Beckmann, Björn, 47057 Duisburg (DE); Böttcher, Andreas, 40822 Mettmann (DE); Eßer, Winfried, 44805 Bochum (DE); Gaio, Giuseppe, 53173 Bonn (DE); Küperkoch, Rudolf, 45219 Essen (DE); Schumann, Eckart, 45468 Mülheim an der Ruhr (DE); Teteruk, Rostislav, 45468 Mülheim an der Ruhr (DE)

(57) **Zusammenfassung**

Durch die Verwendung von Vertiefungen in einer Schicht werden Abplatzungen innerhalb der Interfaces durch die Schichten vermieden.

## Beschreibung

Die Erfindung betrifft die Modifizierung einer Oberfläche um ein Loch in einem Schichtsystem.

Schichtsysteme werden insbesondere für Bauteile verwendet, die bei hohen Temperaturen eingesetzt werden. Dies sind insbesondere Turbinenschaufeln mit einem metallischen Substrat, metallischer Anbindungsschicht und keramischer Wärmedämmschicht.

Zusätzlich werden insbesondere Gasturbinenbauteile gekühlt, indem ein Kühlmedium aus einem Kühlloch heraustritt, um das Bauteil im Innern zu kühlen, aber auch um das Bauteil außen vor zu heißen Gasen zu schützen.

Solche Löcher werden oft nach vollständiger Beschichtung des Substrats eingebracht, wobei die Öffnung an ihrer Innenfläche dann eine Schwachstelle oder Ausgangspunkt für Risswachstum sein kann.

Es ist daher Aufgabe der Erfindung, o.g. Problem zu lösen.

Die Aufgabe wird gelöst durch eine oder mehrere Vertiefungen um das Loch herum gemäß Anspruch 1.

In den Unteransprüchen sind weitere vorteilhafte Maßnahmen aufgelistet, die beliebig miteinander kombiniert werden können, um weitere Vorteile zu erzielen.

Es zeigen
- Figur 1: ein Kühlloch nach dem Stand der Technik,
- Figur 2 - 6: Ausführungsbeispiele der Erfindung,
- Figur 7: ein Schichtsystem,
- Figur 8: eine Turbinenschaufel,
- Figur 9: eine Brennkammer,
- Figur 10: eine Gasturbine und
- Figur 11: eine Liste von Superlegierungen.

Die Ausführungsbeispiele in der Beschreibung stellen nur Ausführungsbeispiele der Erfindung dar.

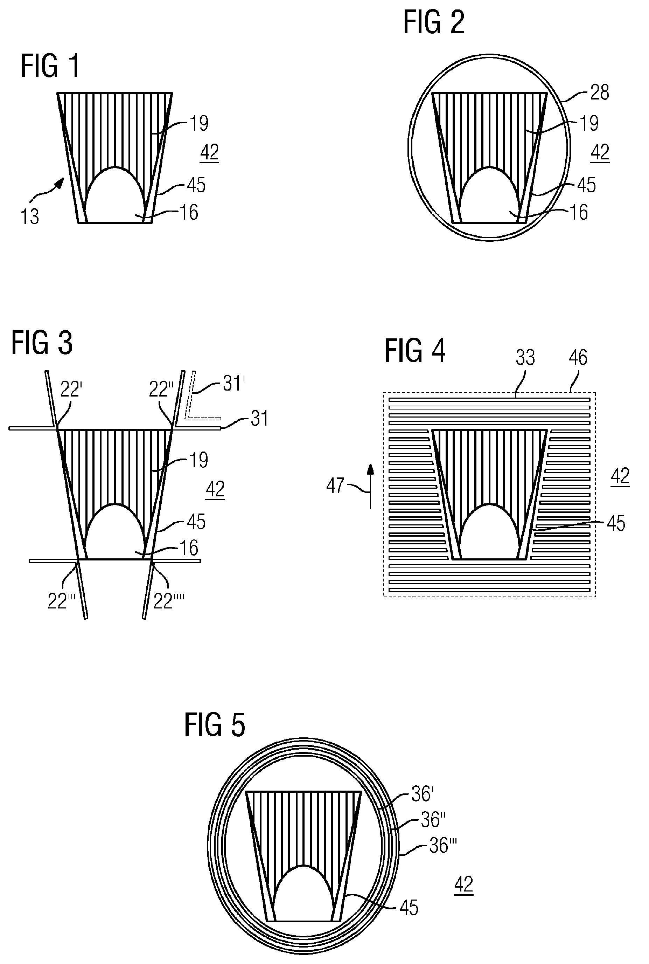

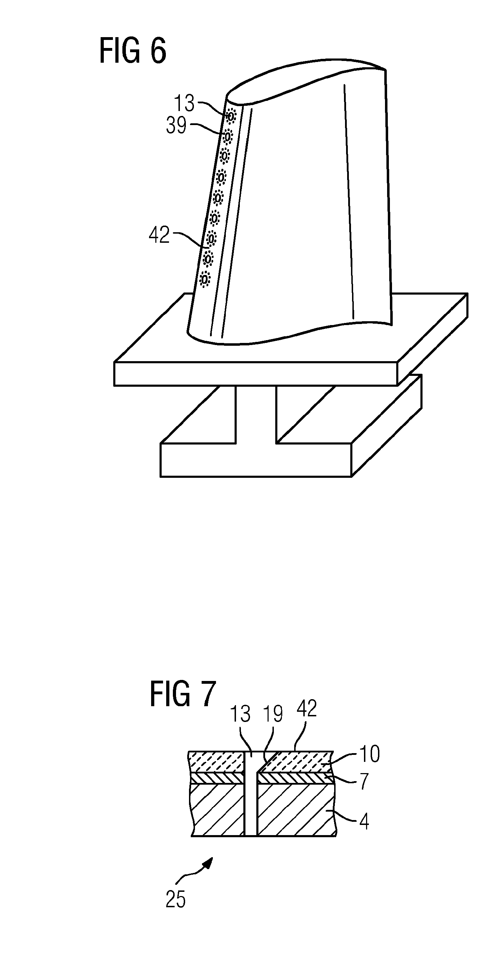

Figur 1 zeigt eine Aufsicht auf eine Oberfläche 42 einer Schicht 10 (Fig. 7) mit einem Loch 13, das hier insbesondere als Filmkühlloch ausgebildet ist.

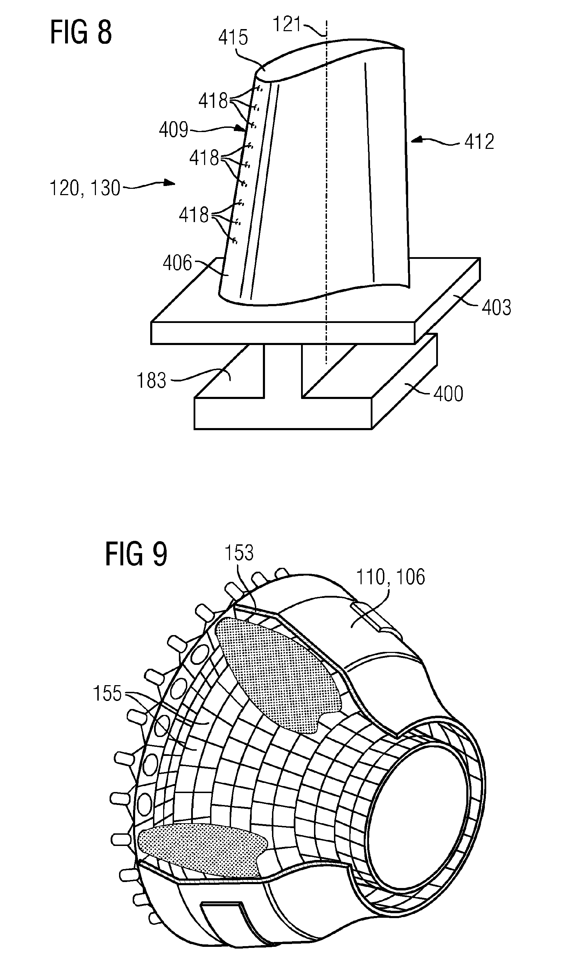

An der Oberfläche 42 gibt es eine Kontur 45 um das Loch 13 heran. Das Filmkühlloch 13 kann eine radiale Bohrung 16 mit symmetrischem oder unsymmetrischem Querschnitt aufweisen. Je nach Anwendung bzw. Stelle an dem Brennkammerstein 155 (Fig. 9) oder der Turbinenschaufel 120, 130 (Fig. 8) ist das Filmkühlloch 13 mit einem Diffusor 19 ausgebildet.

Der Diffusor 19 stellt eine Verbreiterung des unteren Anteils 16 des Lochs 13 dar (Fig. 7).

Figur 7 zeigt einen Querschnitt durch ein Schichtsystem 25. Das Schichtsystem 25 weist ein Substrat 4 auf.

Das Substrat 4 ist vorzugsweise metallisch und weist ganz insbesondere nickel- oder kobaltbasierte Superlegierungen auf.

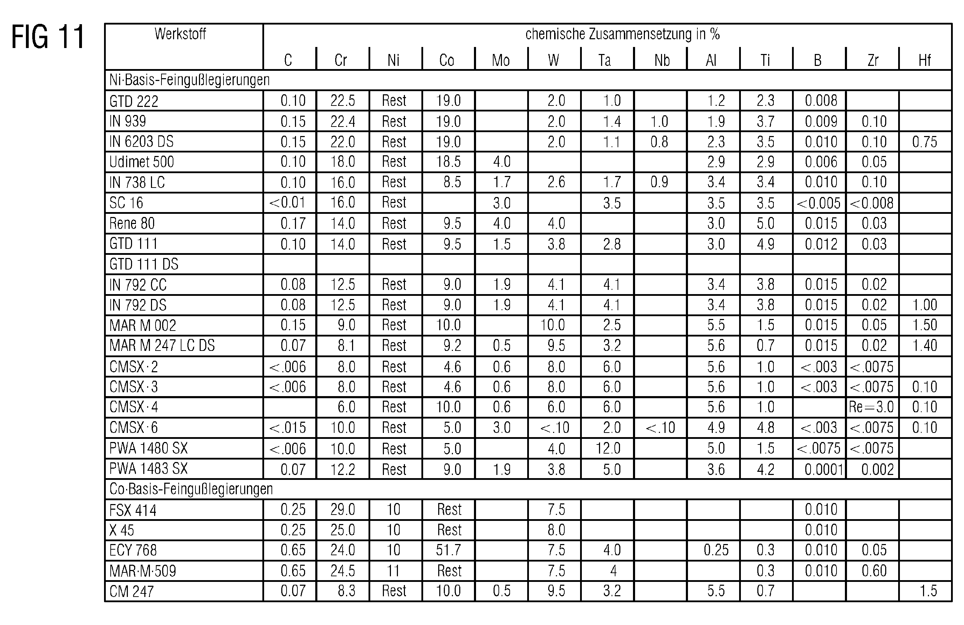

Dabei werden vorzugsweise Legierungen gemäß Figur 11 verwendet.

Auf dem Substrat 4 direkt oder auf einer metallischen Anbindungsschicht 7 ist eine äußere keramische Schicht 10 aufgebracht, die die äußerste Oberfläche 42 darstellt.

Durchgehend durch das Schichtsystem 25, also durch die Schichten 7, 10 und das Substrat 4, ist ein Loch 13 vorhanden, das auch einen Diffusor 19 aufweisen kann.

Zur Lösung des Problems werden Vertiefungen 28, 31, 33, 36 um das Loch 13 oder mehreren Löchern des Bauteils 25, 120, 130, 155 herum eingebracht, die das Loch 13 zumindest teilweise oder vollständig umschließen.

Die Vertiefungen 28, 31, 33, 36 können in die äußere Oberfläche 42 eingebracht werden oder werden entsprechend in dem metallischen Substrat 7 oder in dem Substrat 4 eingebracht, so dass sich bei der nachfolgenden Beschichtung eine entsprechende Vertiefung an der Oberfläche 42 ergibt.

Die Vertiefung 28 weist wie in Figur 2 eine geschlossene, insbesondere gebogene Linie 28, die vorzugsweise als Kreis oder als Oval ausgebildet ist. Dabei können eine oder mehrere Vertiefungen 36', 36" , ... (Figur 5) verwendet werden.

Die Vertiefung 28 kann die Kontur 45 der Öffnung des Lochs 13 berühren oder beabstandet sein (gilt für Fig. 1, 2, 4, 5, 6).

Figur 3 zeigt ein weiteres Ausführungsbeispiel der Erfindung. Hier ist ausgehend von den Ecken 22' bis 22'''' der Kontur 45 des Lochs 13 oder des Diffusors 19 eine V- oder L-förmige Vertiefung 31, 31' eingebracht. Die Ecke der L- oder V-Form 31, 31' schließt sich vorzugsweise an die Ecke 22', ... des Lochs 13 oder Diffusors 19 an.

Dabei kann eine zweite V- oder L-Form 31, 31' anschließend an die erste V- oder L-Form 31, 31' als Vertiefung vorhanden sein, wie es gestrichelt angedeutet ist (dies ist hier nur beispielhaft für nur eine Ecke 22" dargestellt).

Figur 4 zeigt ein weiteres Ausführungsbeispiel der Erfindung. Die Vertiefungen 33 sind hier vorzugsweise gerade, nicht geschlossene Linien und erstrecken sich ganz insbesondere senkrecht zu einer Überströmrichtung 47 über das Loch 13. Dies stellt jedoch keine Einschränkung dar, ebenso können die Vertiefungen 33 in Überströmrichtung 47 verlaufen.

Ein gedachter Umfang 46 (gestrichelt), der durch die linienförmigen Vertiefungen 33 gebildet wird, ist vorzugsweise quadratisch oder rechteckig ausgebildet.

Die Vertiefungen 33 füllen die Fläche um den Umfang 46 bis zur Kontur 45 des Lochs 13 aus, d.h. erstrecken sich bis zur Kontur 45 des Lochs 13 oder bis kurz vor die Kontur 45.

Figur 6 zeigt ein weiteres Ausführungsbeispiel der Erfindung. Die Löcher 39 stellen hier die Vertiefungen dar, die sich entlang eines gewissen Verlaufs um das Loch 13 erstrecken.

Das Loch 13 ist hier beispielsweise auf der Anströmkante einer Turbinenschaufel 120, 130 ausgebildet. Diese punktförmigen Vertiefungen 39 können ebenfalls auf die Anwendungsbeispiele der Figuren 2 bis 5 angewandt werden, d.h. die punktförmigen Vertiefungen erstrecken sich entlang der Linie oder würden miteinander verbundene Linien gemäß der Figur 2 bis 5 ergeben.

Die Figur 8 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0, 4Y-1, 5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 9 zeigt eine Brennkammer 110 einer Gasturbine.

Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

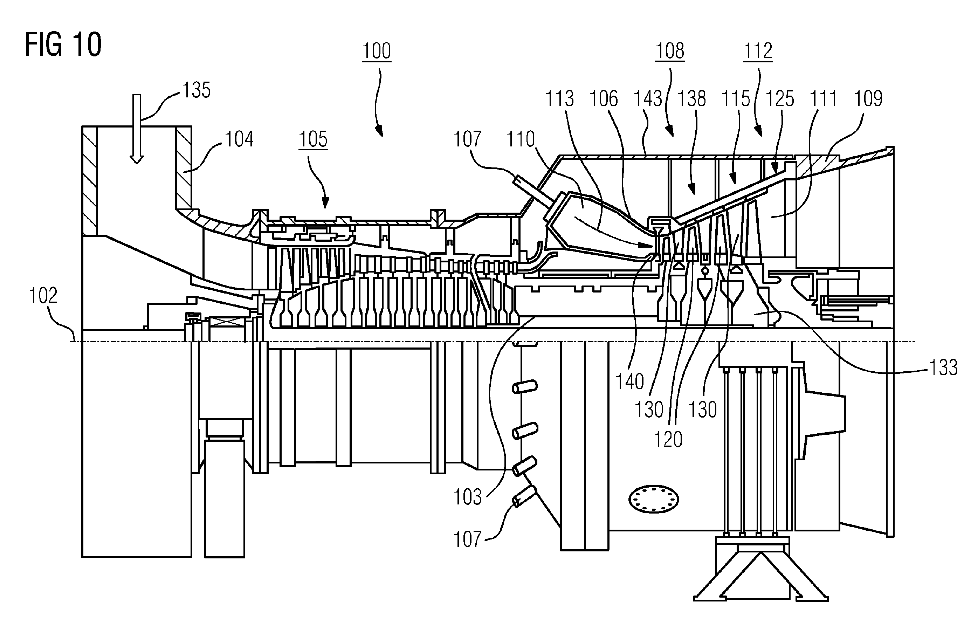

Die Figur 10 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe

Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Schichtsystem (25),
zumindest aufweisend:
ein Substrat (4),
eine Schicht (10),
wobei das Schichtsystem (25) ein Loch (13) zumindest in der Schicht (10) aufweist,
wobei in der Nähe um das Loch (13) oder
direkt anschließend an eine Begrenzungslinie (45) des Lochs (13)
zumindest eine,
insbesondere mehrere,
Vertiefungen (28, 31, 33, 36) in der Oberfläche (42) der Schicht (10) vorhanden sind.

2. Schichtsystem nach Anspruch 1,
bei dem das Loch (13) einen Diffusor (19) an der Oberfläche (42) aufweist.

3. Schichtsystem nach einem oder beiden der Ansprüche 1 oder 2,
bei dem Vertiefungen (28, 31, 33, 36) an der Oberfläche (42) länglich ausgebildet sind.

4. Schichtsystem nach einem oder mehreren der Ansprüche 1, 2 oder 3,
bei dem die Vertiefung (28, 36) zumindest eine geschlossene Linie um das Loch (13) darstellt,
die insbesondere gebogen,
ganz insbesondere rund oder oval ausgebildet ist.

5. Schichtsystem nach einem oder mehreren der Ansprüche 1, 2, 3 oder 4,
bei dem mehrere geschlossene umlaufende Vertiefungen (36) um das Loch (13) herum vorhanden sind.

6. Schichtsystem nach einem oder mehreren der Ansprüche 1, 2 oder 3,
bei dem zumindest eine nicht umlaufende, nicht geschlossene Vertiefungen (31, 33),
insbesondere als Linie,
ganz insbesondere mehrere,
vorhanden sind.

7. Schichtsystem nach einem oder mehreren der Ansprüche 1, 2, 3, 4, 5 oder 6,
bei dem die Vertiefungen (28, 31, 33, 36) geradlinig ausgebildet sind.

8. Schichtsystem nach einem oder mehreren der Ansprüche 1, 2, 3, 6 oder 7,
bei dem die Vertiefung (31, 31') V- oder L-förmig ausgebildet ist und
insbesondere sich mit ihrer Ecke der V- oder L-Form an einer Ecke (22', 22") oder Rundung der Kontur (45) des Diffusors (19) oder des Lochs (13),
ganz insbesondere an allen Ecken,
anschließt.

9. Schichtsystem nach einem oder mehreren der Ansprüche 1, 2, 3, 4, 5, 6, 7 oder 8,
bei dem mehrere V- oder L-förmige Vertiefungen (31, 31') ineinander angeordnet sind.

10. Schichtsystem nach einem oder mehreren der Ansprüche 1, 2, 3, 6 oder 7,
bei dem die Vertiefungen (33),
die insbesondere linienförmig ausgebildet sind,
als äußeren gedachten Umfang eine quadratische oder rechteckige Form aufweisen.

11. Schichtsystem nach einem oder mehreren der Ansprüche 1, 2, 3, 4, 5, 6, 7, 8, 9 oder 10,
bei dem die Linien durch mehrere punktuelle oder gestrichelte Vertiefungen (39) gebildet werden.
